# EUROPEAN PATENT SPECIFICATION

(11) **EP 4 087 286 B1**
(45) Date of publication and mention of the grant of the patent: **02.07.2025**
(21) Application number: 21172105.5
(22) Date of filing: 04.05.2021
(51) Int. Cl.: H04W 4/06, H04W 28/08, H04N 21/258, H04W 4/02

(54) **NETWORK MANAGER, RECEIVING DEVICE AND METHODS FOR BROADCAST RADIO ACCESS NETWORKS**
NETZWERKVERWALTER, EMPFANGSVORRICHTUNG UND VERFAHREN FÜR RUNDFUNKFUNKZUGANGSNETZWERKE
GESTIONNAIRE DE RÉSEAU, DISPOSITIF DE RÉCEPTION ET PROCÉDÉS POUR RÉSEAU DE DIFFUSION D'ACCESS SANS FIL

(43) Date of publication of application: 09.11.2022
(73) Proprietor: Rohde & Schwarz GmbH & Co. KG, 81671 München (DE)
(72) Inventor: JANNER, Thomas, 82194 Gröbenzell (DE); OESTREICHER, Lars, 80538 München (DE); REITMEIER, Manfred, 84036 Landshut (DE); SINNHUBER, Johannes, 86916 Kaufering (DE); TAGA, Aziz, 81241 München (DE); UHLMANN, Maurice, 84427 St. Wolfgang (DE)
(74) Representative: Novagraaf Group

(56) References cited:
- EP-A1- 3 200 453
- EP-A1- 3 633 938
- WO-A1-03/084098

## Description

### TECHNICAL FIELD

The disclosure relates to a broadcast network and a method for operating a broadcast network.

### BACKGROUND

Although applicable to any combination of different networks, the present disclosure will mainly be described in conjunction with broadcast networks and cellular networks.

Today, the number of communication devices that are served in cellular networks increases steadily. One source of new communication devices is the increasing demand of users for mobile voice and data communication. Other sources of this increase are new applications, like Internet-of-Things or loT devices.

Document EP 3 633 938 A1 discloses a how to offload data and video traffic to a supplemental downlink overlay network. Document WO 03/084098 A1 discloses providing broadcast data to a radio device via a broadcast channel and communicating from the radio device to a respective broadcast station via the internet. Document EP 3 200 453 A1 discloses sending sectional videos comprising a region of interest of a video in response to receiving a region-of-interest request.

With an increasing number of communication devices, cellular networks become more and more complex. Consequently, the technical and financial efforts required for building and managing such networks continually increase.

There is a need for reducing these efforts.

### SUMMARY

The above stated problem is solved by the features of the independent claims. It is understood, that independent claims of a claim category may be formed in analogy to the dependent claims of another claim category.

The present disclosure acknowledges the fact that serving more devices in cellular networks increases the complexity of the networks, since smaller cells need to be provided, or more capable transmitters need to be provided, to serve the increased number of devices. With increasing capabilities, the complexity and therefore also the costs for the transmitters raise. The same may apply to the power consumption of such transmitters. Operating the cellular network therefore becomes more demanding technically and economically.

When planning a cellular network, the operator of the network may estimate the average load on the cellular network and dimension the cellular network accordingly. However, when a cellular network is dimensioned for an average load, the cellular network may experience congestion and overload situations.

Such situations may for example arise when an important event, like a live sports event is viewed by many users on their mobile devices. The data stream comprising e.g., video and audio data for such a sports event, needs to be provided to all transceivers of the cellular network that currently serve at least one user that wants to view the event. In addition, users today expect a flawless experience, where the video and audio data is distributed with low latencies and high quality, an expectation that is difficult to meet, especially under high-load conditions.

This is especially true, since mobile cellular networks have been based, and still rely on a strong unicast communication model to provide various services to their end users. However, nowadays consumers find their comfort while watching a huge amount of premium content, of which a high percentage is live media services.

On the other hand, broadcast networks are well established for broadcast and multicast data transmission like TV and radio transmissions via digital video broadcast like DVB-T, for terrestrial transmission, or DVB-S, for satellite transmission. Since broadcast networks are usually designed to provide broadcast or multicast one-way data transmission, these networks may operate efficiently with any number of receiving devices. Further, since the area of coverage of a transmitter of a broadcast network is larger than the area of coverage of a transmitter of a cellular network, which is especially the case for satellite-based broadcast networks, the network infrastructure of broadcast networks is less complex to build and maintain than the infrastructure of cellular networks.

The present disclosure acknowledges that users will demand more and more services from cellular networks on their mobile devices that either require overprovisioning or may lead to congestion in the cellular networks. The present disclosure, therefore, provides means for effectively using the infrastructure provided by broadcast networks to provide data to devices that usually operate in cellular networks.

A cellular network in the context of the present disclosure may be a communication network providing bi-directional wireless communication for electronic devices, like user equipment such as mobile phones, also called UE, IoT devices and the like. Usually, a cellular network is a distributed network comprising "cells", wherein each cell is served by at least one fixed-location transceiver. A site hosting the fixed-location transceivers may also be called a base station. A cellular network usually allows transmission of voice, video and audio data and other types of content. Neighboring cells usually use different sets of frequencies to avoid interference between the single cells. Mobile devices in the cellular network may perform a hand-over when moving from one cell to another. All cells together form the cellular network and provide radio coverage over a wide geographical area, wherein small local cells, e.g. indoor cells, are also possible. A cellular network in the context of the present disclosure may also comprise a satellite-based cellular network. Such a satellite-based cellular network may offer bidirectional communication to receiving devices in small cells with low flying satellites. Usually, such a satellite-based cellular network will comprise a large number of satellites. These types of satellite-based cellular network may be designed for unicast data communication.

The single transceivers of a cellular network are usually communicatively coupled to a common network, also called core network or backbone network. Data may be served to the transceivers from the common network and may be provided from the transceivers into the common network. It is understood, that the common network not necessarily is a single network, but may also comprise different network segments that may be communicatively coupled to each other via other networks, like e.g. the internet or dedicated backbone networks.

In cellular networks traditionally, a point-to-point communication is performed, like e.g. when a telephone call is conducted between to devices. In modern cellular networks like e.g., 5G networks, multicast transmissions are also possible. Due to the limited size of the single cells in a cellular network, the data to be transmitted in a multicast mode hast to be transmitted to every single transceiver via the common network.

In the context of the present disclosure, the operator of a cellular network may also be called the MNO or mobile network operator.

A broadcast network in the context of the present disclosure may be a one-way communication network that usually provides at least one of audio communication and/or video communication in a one-way or unidirectional fashion to electronic devices, like radio receivers or TV sets. It is understood, that a broadcast in the context of the present disclosure may be terrestrial broadcast network, a satellite broadcast network or a combination of both.

It is understood, that in the context of the present disclosure, a broadcast network may also provide communication to devices that are usually served by cellular networks. Further, in the context of the present disclosure a broadcast network is not limited to broadcast transmissions, but may also provide multicast transmissions. A broadcast transmission in this context is to be understood as a transmission to all receivers within reach of a single transmitter. A multicast transmission in this context is to be understood as a transmission to a limited group of receivers within reach of a single transmitter, instead of all receivers.

A broadcast network may be formed by a group comprising at least one of a plurality of radio stations, a plurality television stations, or combined radio and television stations, or satellite stations. The term radio station refers to equipment for transmitting audio content wirelessly e.g., over the air. The term television station refers to equipment for transmitting audio and video content wirelessly e.g., over the air. The term satellite station refers generally to a satellite that is communicatively linked to a ground station and may be used as a radio access network or transmitter in the broadcast network.

It is understood, that for a broadcast network a common network, also called core network, may be provided that couples to the single transmitters, as explained above for cellular networks. If one or more satellites are part of the broadcast network, the respective ground stations may be communicatively coupled to the core network of the broadcast network. Since the area of coverage of a transmitter of a broadcast network is larger than the area of coverage of a transmitter of a cellular network, the common network needs to connect to a smaller number of transmitters and therefore usually is of lower complexity than the common network of a cellular network.

As explained above, the geographical area covered by each of the transmitters of a broadcast network is larger than the geographical area covered by each of the transmitters of a cellular network. In embodiments, the geographical area covered by each of the transmitters of a broadcast network may comprise an area larger than the geographical area covered by at least two transmitters of a cellular network, i.e. larger than two cells of the cellular network.

In examples, the area covered by a single terrestrial transmitter of a broadcast network may comprise a radius of about 1 km up to more than 100km. The area covered by a single transmitter of a cellular network may comprise a radius of up to 35 km. At the same time, the transmitting power of a transmitter in a broadcast network may range up to 20 kW. In cellular networks, the transmitting power of the respective transmitters may range up to 500 Watts. Further, the transmitters in broadcast networks will usually use other frequencies than the transmitters in cellular networks. The transmitters in the broadcast networks may for example use frequencies in the UHF band, for example between 470 MHz and 698 Mhz.

For satellites as transmitters, the size of the area of coverage may be size of the full earth globe, and the transmission power may be between 20W and 300W (depending on the bands and the usage).

Exemplary standards used in broadcast networks may comprise DVB-based protocols, especially DVB-T and DVB-S based protocols, ATSC-based protocols, and 5G for broadcast networks or any future broadcast network standard. In cellular networks, the respective standards like UMTS, LTE and 5G or any future cellular network protocol may be used.

In the context of the present disclosure, the operator of a broadcast network may also be called the BNO or broadcast network operator.

The cellular networks and the broadcast networks mentioned in the present disclosure may comprise so called radio access networks or RANs and core networks or CNs. A RAN or Radio Access Network provides a radio access technology, and usually resides between a user device and the respective CN. A RAN in the context of the present disclosure may comprise the base station with respective antennas and a connection to the CN, and/or a satellite with connection to the CN via a respective ground station.

The radio access networks, also called RANs, and core networks, also called CNs, mentioned in the present disclosure are not limited to a specific type of network. Nevertheless, in the present disclosure a RAN with regard to cellular networks may comprise at least one of a GRAN, also GSM radio access network, a GERAN, which is essentially the same as GRAN but specifying the inclusion of EDGE packet radio services, a UTRAN, also called UMTS radio access network, and an E-UTRAN, the Long Term Evolution (LTE) high speed and low latency radio access network, or a RAN according to any upcoming RAN standard, or satellite-based RAN.

Accordingly, in the present disclosure a RAN with regard to a broadcast network may comprise any technology that allows transmitting data in a broadcast or multicast manner to electronic devices. Such a RAN may for example comprise a DVB-T transmitter with respective antennas and a connection to the respective core network, or a satellite as DVB-S transmitter with respective antennas and a connection to the respective core network via the ground station of the satellite.

Possible RANs comprise, but are not limited to, multi-frequency network or MFN RANs, single frequency network or SFN RANs, and SC-PTM RANs, also called Single-Cell - Point-to-Multipoint RANs. The RANs in the context of the present disclosure may for example comprise so called LPLT transmitters, also called low-power low-tower transmitters, HPHT transmitters, also called high-power high-tower transmitters, MPMT transmitters, which are a hybrid transmitter combining elements of LPLT and HPHT transmitters. MPMT stands for Medium Power Medium Tower. MPMT transmitters may have an output power that comes in between LPLT and HPHT, e.g. 350W - 6KW, which automatically results in a coverage capability between those of LPLT and HPHT, e.g. 5KM - 30KM, depending on the specific deployment scenarios and other parameters. Further, a RAN in the context of the present disclosure may comprise at least one transmitter with a fixed geographical location. As explained above, a transmitter for a broadcast network may comprise a transmitting power of up to 20kW or more, and cover an area of more than 100km radius.

The term core network in the context of the present disclosure refers to a network that couples to the RANs of the respective network. Core networks are sometimes also referred to as backbone networks. It is understood, that any networking technology, like cable-based ethernet, optical fiber-based ethernet, or other network technologies may be used to transmit data in the core network to and from the RANs. The core network may further comprise connections to other networks, like the networks of content providers or the like.

It is understood, that radio access networks and core networks in the context of the present disclosure may comprise further elements, like network connections, network switches, network hubs, servers, and the like.

The present disclosure acknowledges, as indicated above, that data may be offloaded from load data source networks, like cellular networks, to a broadcast network. To support offloading of load data to broadcast network, the present disclosure provides the network manager.

The network manager comprises a data interface that communicatively couples the network controller to at least one radio access network of the broadcast network and a load data source network. Such a load data source network may be the core network of the broadcast network. The core network usually transports load data to the radio access networks for emission in a load data signal to the receiving devices.

It is understood, that the load data source network and the radio access networks may be operated by the same operator. The network controller may therefore be coupled via a single network to the load data source network and the radio access networks. Communicatively coupled in this context refers to the data interface being capable of communicating with the respective entity, while a direct network connection or indirect network connection e.g., via other networks like the internet, is possible. Further, the data interface may comprise a single hardware interface or multiple hardware interfaces.

In other examples, the load data source network and the radio access networks may be operated by different operators and may not be provided in the same network. The data interface in such an example may communicatively couple to the different operators' networks as required directly or indirectly.

The network manager of the present disclosure may be provided in the broadcast network. In such an embodiment the data interface may be an internal interface in the broadcast network. The network manager may for example be provided as dedicated element, like a server in the broadcast network. Such a server may be communicatively coupled to the core network of the broadcast network via a hardware-based data interface, like an Ethernet interface. The network manager may also be provided as an additional function in a server that is already present in the core network. Such a network manager may for example be provided as software application in the server or a function of a firmware or operating software of the server. Such a network manager may comprise the data interface as a software-based interface, like an API, or as a combination of a software-based and hardware-based interface.

The core network is usually communicatively coupled to at least one radio access network. It is understood, that the broadcast network may comprise any number of radio access networks that may all be coupled, directly or indirectly, to the core network. The single radio access networks may be distributed over a specific geographical area like e.g., a country or simply the area of operation of a network operator that operates the broadcast network. The core network distributes load data to the radio access networks that is to be distributed or emitted via the radio access networks. It is understood, that the core network may comprise routing mechanisms that allow transmitting specific pieces of load data only to those radio access networks that should emit the load data in respective load data signals. It is understood, that the load data refers to the content or content data that is to be transmitted to receiving devices. Such load data may comprise video data, audio data, software update data, or any other type of data that is to be transmitted.

It is understood, that the core network may comprise a respective interface or respective interfaces that allow operators of cellular networks or other content providers to provide the load data to the core network. Such interfaces may comprise hardware-based network interfaces, API-based or software-based interfaces, or a combination of both. The core network may for example be coupled via a hardware interface to a network of a content provider or cellular network operator directly or indirectly. The load data may be provided to the core network via an upload functionality that is provided by the core network. It is understood, that such an upload functionality may comprise security measures, like e.g. authentication and encryption. In embodiments, the core network may for example comprise one or more FTP or HTTP(S) servers, that allow a content provider to upload the load data. In case of live streaming data, the core network may also provide a streaming endpoint, that accepts the load data in the form of a stream for further processing in the core network. In other embodiments, the broadcast network e.g., a network controller or other elements of the core network, like a data loader, may be configured to retrieve the load data from a location that may be indicated by the provider of the load data.

If, as indicated above, the network manager is provided as part of the broadcast network, request data as provided to the core network is directly available for the network manager. This is especially true, if the network manager is provided in an element of the core network.

The network manager may however also be provided outside of the broadcast network. This allows providing the function of the network manager as an external service to operators of broadcast networks.

In such embodiments, the network manager may be provided as a dedicated service. The expression dedicated service includes providing the service from a dedicated server, a virtualized server, as a cloud-based service, or any other form of providing the respective functionality. The data interface of such a network manager may comprise a hardware-based interface, like an Ethernet interface, a software-based interface comprising respective API-functions, upload and download functions, and control functions, or a combination of both.

If the network manager is not provided in the broadcast network, the request data in the load data source network is not directly available to the network manager. The data interface may therefore be capable of passively receiving and/or actively retrieving the request data from the load data source network. The load data source network may for example comprise a cellular network, a content distribution network or other content provider networks.

As indicated above, the network controller may receive general request data. According to the present disclosure, the network controller also receives location based request data in the general request data. The general request data may be seen as a kind of metadata for the load data, and defines or requests, parameters for how the load data should be emitted via the radio access networks. The request data therefore indirectly defines which radio access network resources should be used for emission of the load data signal, without explicitly stating the radio access network resources. The request data may however also define or request specific radio access network resources for transmission of the load data directly.

The location based request data allows the network controller to define specific location based radio access network resources. Such location based radio access network resources influence the emission of the load data signal by the radio access networks taking into account specific regional parameters by providing respective settings for single regions.

Generally, the request data may refer to the priority of the load data. The priority of the load data defines how important it is to emit the load data for the provider of the load data e.g., a cellular network provider or a content distribution network. Load data with a higher priority may be preferred when assigning other general request data for the respective load data. The provider of the load data may define the priority in the general request data, and the operator of the broadcast network may for example bill the provider of the load data based on, but not necessarily exclusively, the priority defined for the load data.

Another general request data may refer to a quality for transmission of the load data. The quality may refer to a bit rate of the load data or a coding quality used for encoding the load data. A further general request data may refer to a codec used for encoding the load data. These types of general request data may be relevant especially with video and audio data, and may influence the perceived quality of the video or audio at the receiving devices.

The general request data may also refer to a bit rate for transmission of the load data that indicates the minimum bit rate that the provider of the load data requires. This general request data is for example important to allow the provider of the load data to request the minimum bit rate for audio or video streaming, that would allow the receiving devices to reproduce the audio or video stream with the required quality parameters.

Another general request data may also refer to an encryption information for encrypting the load data. This type of general request data may be used e.g. to control access to the load data or to ensure integrity of the load data. With such an encryption-related general request data, the encryption may be performed in the core network or the radio access networks.

Other general request data may refer to a transmission time for transmission of the load data, or a geographical location or region for transmission of the load data. The general request data may for example request the load data to be transmitted at a specific time and a specific region. Such general request data may for example be used to control the emission of load data that is temporarily required in specific regions. Possible load data for a temporary and local transmission may for example refer to live sports events that need to be broadcast in a specific region at the exact time of the live sports event. The general request data may for example comprise that the load data should be transmitted in a specific area, for example southern Germany, on a specific day and a specific time, and will last about 2,5 hours. Instead of a general region, like southern Germany, the general request data may also specify a transmitter location, like e.g. Wendelstein or Ismaning, which are located in southern Germany. Other exemplary general request data may for example indicate that specific load data should be transmitted 24 hours every day and in a hole country or over a hole continent.

In addition, a general request data may refer to types of intended receiving devices for the load data signals. The data transmission may for example be configured differently for reception by mobile UEs e.g., smartphones or the like, or by stationary loT device, also called internet of things devices.

General request data may also refer to wireless radio access network resources for transmission of the load data, like for example at least one of a frequency range for transmission of the load data, a modulation scheme used for transmission of the load data, Cyclic Prefix, CP, : Sub-Carrier Spacing, SCS, Allocation Retention Priority, ARP, Pre-emption Capability Indicator, PCI, Pre-emption Vulnerability Indicator, PVI, Channel Quality Indicator, CQI (within radio access network), and Quality of service Class Indicator, QCI (within core network).

It is understood, that not all of the above-mentioned types of general request data need to be explicitly defined in the general request data. Some of the general request data may for example be derived from the load data or may be defined by the network controller. For example, a coding quality, or a bit rate, or a used codec or the like may be derived from audio or video load data.

For transmission of the load data, the relevant radio access networks may be configured by the network controller based on the general request data and also based on the received location based request data. Configuring in this regard refers to providing, directly or indirectly, respective configuration data to the radio access networks, which will allow the radio access networks to emit the load data signal as indicated in the request data with the respective radio access network resources. If the request data indicates that the load data should only be distributed in specific areas, the network controller may also identify the relevant radio access networks and provide the configuration data to the respective radio access networks only. The network controller may also inform the respective core network accordingly, that may also provide the load data to the respective radio access networks only.

It is understood, that the network controller may provide the configuration data to the radio access networks prior to the core network providing the load data to the respective radio access networks. To this end, the configuration data may identify the load data with a respective identifier that may be provided in the configuration data and the load data. This allows for example pre-configuring the radio access networks when the request data is received, which may be long before the load data is to be emitted, and therefore long before the load data is provided to the core network or the radio access networks. This may for example be the case, when an operator of a load data source network reserves radio access network resources for the transmission of regional content, like map data, data regarding points of interest in the respective region, region-specific commercials, regional regulations and laws, and the like. Generally, pre-delivering load data may usually be performed with data that does not change quickly. In contrast to such slow-changing data, other data that changes quickly, like for example traffic data, catastrophe and hazard data, and weather data will be provided when necessary.

If data is pre-delivered to receiving devices, such a receiving device may store the load data for further distribution e.g., in a building. The receiving device may for example store the load data on a hard disk and provide the load data to local devices upon request via a local network, like an Ethernet network or a WIFI network. Such a receiving device may therefore act like a gateway between the broadcast network and the local devices.

The radio access networks may comprise respective controllers that receive and store the configuration data and control the transmitter elements in the radio access networks to use the respective radio access network resources accordingly. In modern network architectures, single elements may be virtualized. Therefore, the controllers of the radio access networks may also be provided as virtualized controllers in a server that is provided in the core network. Respective request data may then be provided from the virtualized controllers to the other elements of the radio access networks. It is understood, with the possibility of virtualizing network elements, that an element that is disclosed in the present disclosure as being part of or being comprised by another element, may be functionally linked to the other element. At the same time such an element may be virtualized and provided at another location but linked via respective data connections to the other element.

It is understood, that receiving devices in the context of the present disclosure comprise a wireless receiver and a location determiner that are communicatively coupled to a reception controller. The wireless receiver may receive load data via broadcast networks and via cellular networks. If the load data is received via different networks, the reception controller is configured to reassemble or reconstruct the original load data from the load data parts received via different radio access networks.

The load data received by the wireless receiver comprises location information. The location information comprises at least part of the location based information provided by the network manager in the configuration data.

In addition, the location determiner, for example a GPS receiver or any other positioning system, determines the location of the receiving device.

The reception controller now processes the received load data based on the received location information and the determined location. The reception controller may for example determine a validity of the load data based on the received location information and the determined location. The load data may for example be determined to be valid, if the determined location is within in predetermined distance to the area or location indicated by the received location information. The reception controller may then only process valid load data.

A broadcast network in the context of the present disclosure is capable of dynamically receiving the load data from e.g., a cellular network, and of transmitting the load data to electronic devices, that usually receive the load data via the cellular network. The network manager will control how the load data is emitted by the radio access networks of the respective broadcast network. Instead of by a cellular network, the load data may also be provided directly by a content distribution network or other content providers.

Especially for cellular networks, the broadcast network provides a kind of backup network or offloading network for high load situations. Further, via the network controller an operator of such a network, like a cellular network, may dynamically offload load data into the broadcast network. It is understood, that the respective receiving devices may be informed via the respective network e.g., the cellular network, about the transmission of the load data via the broadcast network.

Further embodiments of the present disclosure are subject of the further dependent claims and of the following description, referring to the drawings.

In an embodiment, the location based radio access network resources may comprise at least one of a geographical location for transmission of the load data, a frequency range or bandwidth for transmission of the load data, a transmission time or time slot for transmission of the load data, and a modulation scheme for transmission of the load data.

In another embodiment, the location based request data comprises at least one of a geographical location to which the load data refers, and an indication of a point of interest to which the load data refers, an indication of official regulations which the load data comprises, and an indication of roads to which the load data refers.

The radio access network resources may refer to at least one of a geographical location for transmission of the load data, a frequency range or bandwidth for transmission of the load data, a transmission time for transmission of the load data, and a modulation scheme for transmission of the load data. Generally, the radio access network resources define parameters for configuration of the radio access network resources. Other possible radio access network resources may refer to Cyclic Prefix, CP, Sub-Carrier Spacing, SCS, Allocation Retention Priority, ARP, Pre-emption Capability Indicator, PCI, Pre-emption Vulnerability Indicator, PVI, Channel Quality Indicator, CQI (within radio access network), and Quality of service Class Indicator, QCI (within core network).

It is understood, that the configuration data may configure the single radio access networks to emit the load data signal with different radio access network resources, at least with partially different radio access network resources. The network controller may for example provide the location based radio access network resources such that the radio access networks emit the load data signal with different frequencies or frequency ranges.

It is understood, that the network controller may comprise or maintain a radio access network resources schedule. Such a radio access network resources schedule comprises information about which radio access network resources are used and when. Alternatively, such a radio access network resources schedule may also be maintained either by the radio access networks or the load data source network. The network controller may base the decision about which radio access network resources to provide in the configuration data on the radio access network resources schedule.

The general request data is described above. The location based request data in contrast refers exclusively to geographical parameters of the load data.

The location based request data may for example define a geographical location or area or region to which the load data refers. The geographical location may refer to an area or spot in a landscape. The geographical location may for example be provided for weather data, map data, region-specific commercials, traffic information and the like, that may be provided in the load data.

Further location based request data may comprise an indication of a point of interest to which the load data refers. Such a point of interest may for example be a touristic point of interest. The load data referring to such a point of interest may for example comprise videos, images and textual explanations regarding the point of interest. The respective location based request data allows the network controller to identify the geographical location for the respective point of interest and define the location based radio access network resources accordingly.

Another type of location based request data may comprise an indication of official regulations which the load data comprises or to which the load data refers. The official regulations may for example refer to traffic laws, regulations about the usage of or passage through nature conservation areas, local regulations of cities or counties, and the like. If it is indicated to which regulation the location based request data refers, the network controller may identify the geographical location for the respective regulation and define the location based radio access network resources accordingly.

A further type of location based radio access network resources refers to an indication of roads to which the load data refers. The load data may for example comprise traffic and construction information for the respective roads. If a road is indicated in the location based request data, the network controller may identify the geographical location in which the road is and define the location based radio access network resources accordingly.

It is understood, that the network controller may not only define location based radio access network resources. The network controller may also define all relevant radio access network resources and provide them to the at least one radio access network.

The radio access networks may then emit a load data signal comprising the load data according to the radio access network resources.

In another embodiment, the network controller may be configured to combine the load data with the configuration data into combined load data and to provide the combined load data to at least one of the radio access networks and the load data source network.

It is understood, that the configuration data and the load data may be provided to the radio access networks as separate information, especially if the configuration data is provided before the load data. However, especially in cases where the configuration data is provided at the same time as the load data, the configuration data and the load data may be provided to the radio access networks and/or a load data source network, as combined load data.

The network controller may for example receive the load data via the data interface and provide the configuration data as a header to the load data. Alternatively, the network controller could provide the configuration data to the load data source network, which could add the configuration data as header data to the load data. This also allows dynamically changing the configuration data for different segments of the load data that comprise a dedicated header.

The radio access networks may then emit at least parts of the configuration data in the load data signal. Such parts may then be received and processed by the receiving devices in order to correctly process the load data.

The load data may for example comprise information about the frequencies or frequency ranges on which the load data is emitted in different geographical regions. Such information may for example be provided for neighboring areas that are served by different radio access networks. The load data may also indicate the respective geographical locations or areas for the frequencies.

In embodiments, the load data source network may only provide part of a load data to the network manager for transmission via the broadcast network. The other part of the load data may still be transmitted via the load data source network, i.e. respective transmitters of the load data source network. The configuration data provided in the load data may then comprise respective synchronization information that allows receiving devices to synchronize the load data received via different networks.

In an embodiment, the network controller may be configured to receive the location based request data prior to reception of the load data in the core network.

As already indicated above, the location based request data may be received in the broadcast network or the network manager prior to receiving the load data for reservation of the respective radio access network resources by the respective content provider. A respective memory may be provided in the network controller and/or in the radio access networks.

In yet another embodiment, the network manager may comprise a data storage, and the network controller may be configured to receive load data and store the received load data in the data storage.

In addition to receiving the location based request data prior to receiving the load data, the network manager may also receive the load data in advance to the emission of the load data via the radio access networks.

The network manager may comprise a respective data storage to pre-store the load data for later transmission. This is especially relevant for load data that does not represent live footage and does not need to be emitted instantly.

The network manager may therefore serve as a temporary storage for offloading load data from the content provider e.g., a cellular network. This allows reducing the size and/or number of storages in the content providers network.

Further, if the load data is pre-stored in the network manager, it is also possible to emit the load data in a bulk emission to the receiving devices. This may for example be used to pre-store load data regarding larger regions onto the receiving devices. It is for example possible to pre-load map data or data regarding points of interest or the like onto receiving devices in a specific region. For example a provider of load data may request to offload map data every night onto receiving devices in a specific region.

It is understood, that other intervals for repetitively transmitting load data may be requested by the provider of the load data.

The bulk emission of the load data may be performed during times of the day that usually comprise only a low amount of load data emitted via the network manager, for example during the nights.

In addition, a bulk emission may performed at the maximum possible speed, instead of at a streaming data rate. Therefore, the time required to perform a bulk transmission is reduced compared to streaming a video.

In a further embodiment, the load data may comprise at least two load data sets, and the location based request data may comprise a location based request data set for each one of the load data sets. The network controller may be configured to provide configuration data for each one of the load data sets.

The load data may comprise any number of load data sets that may all refer to the same or different locations. It is understood, that the expression "a location based request data set for each one of the load data sets" is meant to also comprise that one location based request data set refers to two or more load data sets.

The network controller may therefore define multiple sets of configuration data and provide the respective configuration data to the radio access networks for transmission of multiple load data sets. The network controller may in this embodiment also comprise the radio access network resources schedule mentioned above to schedule the respective radio access network resources.

In another embodiment, the reception controller may be configured to process the received load data only if the determined location is within a predetermined distance to the area or location indicated by the received location information.

Since the load data may comprise location based load data, the reception controller may only process the load data is relevant to the current location of the receiving device. This reduces the load on the reception controller, since irrelevant load data may be ignored.

In an embodiment, the reception controller may be configured to receive load data comprising at least two load data sets, and to switch the processed load data set according to the determined location and the received location information.

If multiple load data sets are received, the reception controller may process only the relevant load data sets. Especially, if the receiving device is moving e.g., in a vehicle, the relevant data sets may change while the receiving device is moving. The reception controller may therefore change the sets of load data that are processed.

The present disclosure is also meant to expressly disclose a broadcast network comprising the network manager. Such a broadcast network may comprise at least one radio access network, a core network as load data source network, and a network manager.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a schematic diagram of an embodiment of a network manager according to the present disclosure, a load data source network and a broadcast network;
Figure 2 shows a schematic diagram of another embodiment of a network manager according to the present disclosure, a load data source network and a broadcast network;
Figure 3 shows a schematic diagram of another embodiment of a network manager according to the present disclosure, a load data source network and a broadcast network;
Figure 4 shows a flow diagram of an embodiment of a method for managing a broadcast network according to the present disclosure; and
Figure 5 shows a flow diagram of an embodiment of a method for operating a receiving device according to the present disclosure.

In the figures like reference signs denote like elements unless stated otherwise.

### DETAILED DESCRIPTION OF THE DRAWINGS

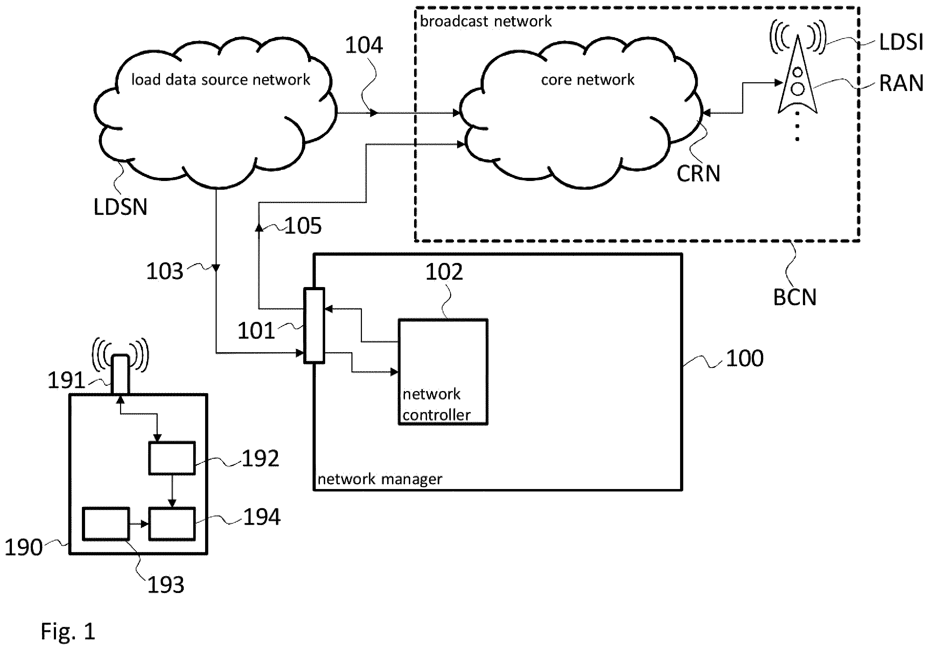

Figure 1 shows a schematic diagram of a network manager 100 together with a load data source network LDSN and a broadcast network BCN.

The load data source network LDSN may be the network of a load data provider, like for example a streaming media service. It is understood, that the load data source network LDSN may comprise data storages, network devices and any other element required to provide the respective services offered by the load data source network LDSN.

The broadcast network BCN comprises a core network CRN that is communicatively coupled to a plurality of radio access networks RAN that emit wireless load data signals LDSI. For sake of clarity, only one radio access network RAN is shown, and more radio access networks RAN are hinted at by three dots. It is understood, that the broadcast network BCN may comprise any number of radio access networks RAN distributed over the area of operation of the operator of the broadcast network BCN. The core network CRN provides load data 104 to the radio access networks RAN for transmission to receiving devices in the load data signals LDSI. The load data 104 may be provided from the load data source network LDSN to the core network CRN directly.

In embodiments, the load data source network LDSN may be implemented as the core network CRN. In such embodiments, the load data 104 may be provided from any other source to the core network CRN. Further, it is understood, that the above-presented explanations regarding load data source networks and broadcast networks may be applied to the load data source network LDSN and the broadcast network BCN.

In addition, in other embodiments, the network manager 100 may be provided as component of the load data source network LDSN or as component of the broadcast network BCN, especially of the core network CRN.

The network manager 100 comprises a data interface 101 that is internally communicatively coupled to a network controller 102. Externally, the data interface 101 is communicatively coupled to the load data source network LDSN and to the broadcast network BCN.

The network controller 102 receives location based request data 103 with regard to the transmission of load data 104 from the load data source network LDSN. The network controller 102 then provides configuration data 105 for the purpose of configuring the radio access networks RAN to use at least one specific location specific radio access network resource for transmission of the load data 104 based on the received location based request data 103.

The location based radio access network resources comprise at least one of a geographical location for transmission of the load data 104, a frequency range or bandwidth for transmission of the load data 104, a transmission time or time slot for transmission of the load data 104, and a modulation scheme for transmission of the load data 104. The location based request data 103 may comprise at least one of a geographical location to which the load data 104 refers, and an indication of a point of interest to which the load data 104 refers, an indication of official regulations which the load data 104 comprises, and an indication of roads to which the load data 104 refers.

The network controller 102 may receive the location based request data 103 prior to reception of the load data 104 in the core network CRN.

The load data 104 may comprises at least two load data sets, and the location based request data 103 may comprise a location based request data set for each one of the load data sets. The network controller 102 may now provide configuration data 105 for each one of the load data sets.

In figure 1 a receiving device 190, for example a smartphone 190, is shown. The receiving device 190 comprises an antenna 101, a wireless receiver 192 that is communicatively coupled to the antenna 101, a reception controller 194 that is communicatively coupled to the wireless receiver 192, and a location determiner 193 that is also communicatively coupled to the reception controller 194.

The wireless receiver 192 receives load data 104 and location information via the load data signals LDSI of the broadcast network BCN. The location determiner 193 determines the location of the receiving device 190. The reception controller 194 processes the received load data 104 based on the received location information and the determined location.

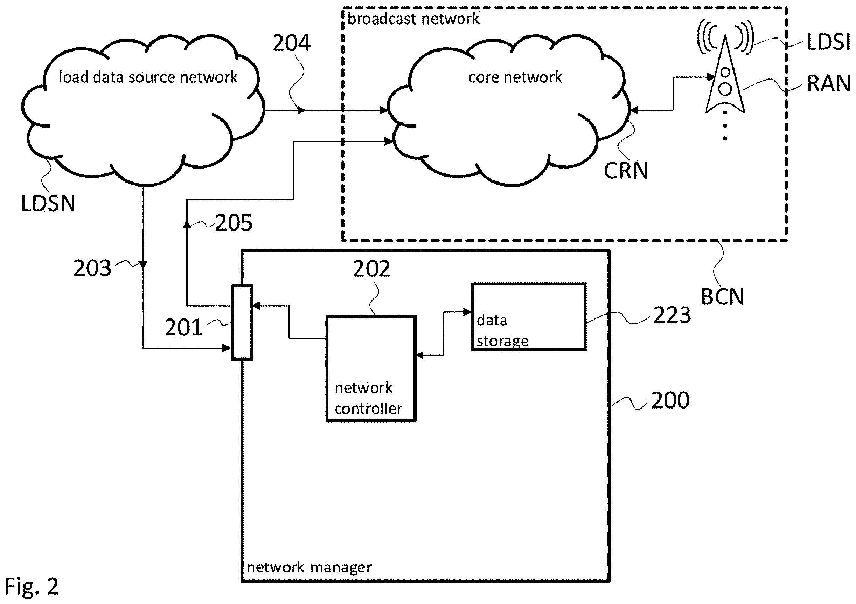

Figure 2 shows another network manager 200 with a load data source network LDSN and a broadcast network BCN. The above explanations regarding the load data source network LDSN and the broadcast network BCN apply mutatis mutandis.

The network manager 200 is based on the network manager 100, and therefore comprises a data interface 201 that is internally communicatively coupled to a network controller 202. Externally, the data interface 201 is communicatively coupled to the broadcast network BCN and the load data source network LSDN. The above-presented explanations regarding the network manager 100 and its elements also apply to the network manager 200 and its elements mutatis mutandis.

The network manager 200 comprises a data storage 223 that is communicatively coupled to the network controller 202. The network controller 202 may store the received load data 204 in the data storage 223.

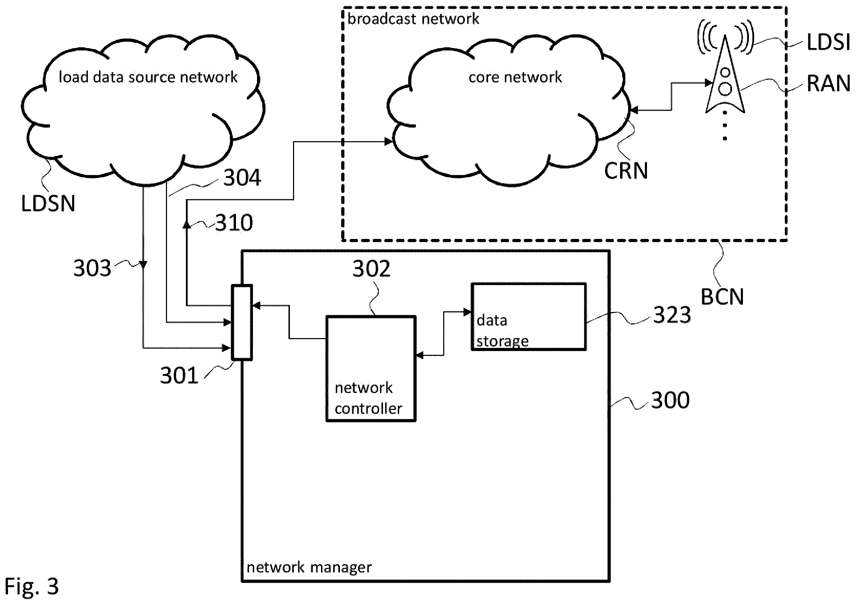

Figure 3 shows another network manager 300. The network manager 300 is based on the network manager 200, and therefore comprises a data interface 301 that is internally communicatively coupled to a network controller 302. Externally, the data interface 301 is communicatively coupled to the broadcast network BCN. The above-presented explanations regarding the network manager 200 and its elements also apply to the network manager 300 and its elements mutatis mutandis.

In contrast to the arrangement of figure 2, in figure 3 the network manager 300 also receives the load data 304. The network controller 302 combines the load data 304 with the configuration data 305 into combined load data 310 and provides the combined load data 310 to the broadcast network BCN. It is understood, that the network controller 302 may also provide the combined load data 310 to the load data source network LSDN or to the radio access networks RAN directly.

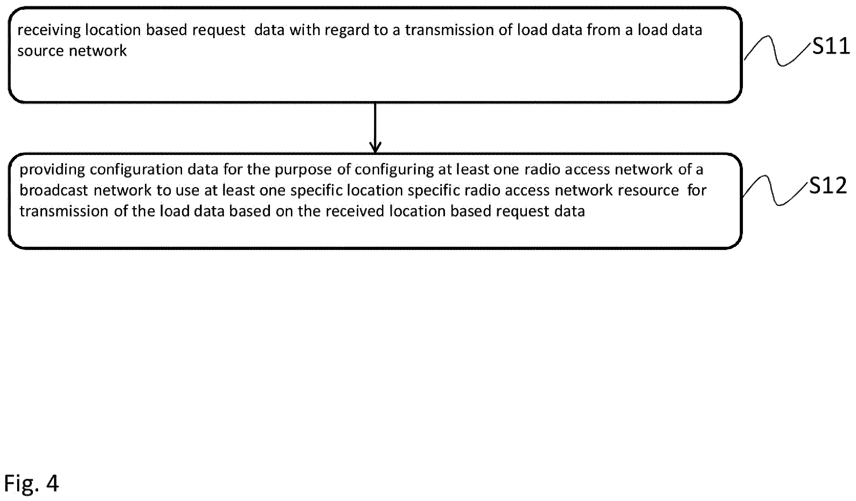

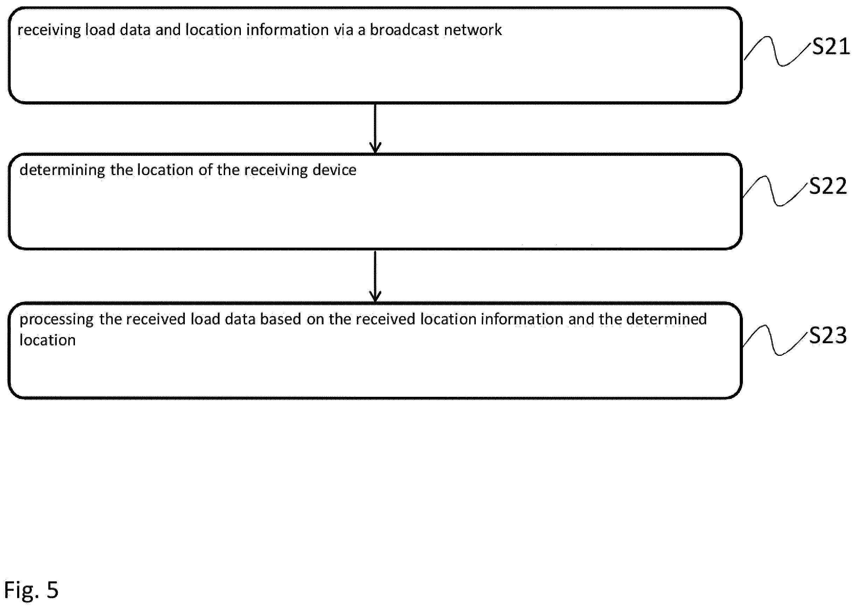

For sake of clarity in the following description of the method-based Figs. 4 and 5 the reference signs used above in the description of apparatus based Figs. 1 - 3 will be maintained.

Figure 4 shows a flow diagram of a method for managing a broadcast network BCN. The method comprises receiving S11 location based request data 103, 203, 303 with regard to a transmission of load data 104, 204, 304 from a load data source network LDSN, and providing S12 configuration data 105, 205, 305 for the purpose of configuring at least one radio access network RAN of a broadcast network BCN to use at least one specific location specific radio access network RAN resource for transmission of the load data 104, 204, 304 based on the received location based request data 103, 203, 303.

Figure 5 shows a flow diagram of an embodiment of a method for operating a receiving device. The method comprises receiving S21 load data 104, 204, 304 and location information via a broadcast network BCN, determining S22 the location of the receiving device 190, and processing S23 the received load data 104, 204, 304 based on the received location information and the determined location.

### LIST OF REFERENCE SIGNS

- 100, 200, 300: network manager
- 101, 201, 301: data interface
- 102, 202, 302: network controller
- 103, 203, 303: location based request data
- 104, 204, 304: load data
- 105, 205, 305: configuration data

- 310: combined load data
- 223, 323: data storage

- 190: receiving device
- 191: antenna
- 192: wireless receiver
- 193: location determiner
- 194: reception controller

- RAN: radio access network
- LDSI: load data signal
- BCN: broadcast network
- CRN: core network
- LDSN: load data source network

- S11, S12, S21, S22, S23: method step

## Claims

1. Network manager (100, 200, 300) comprising:
a data interface (101, 201, 301) configured to communicatively couple to at least one radio access network (RAN) of a broadcast network (BCN) wherein the broadcast network (BCN) comprises a one-way communication network, and wherein the broadcast network (BCN) is configured to wirelessly emit a load data signal (LDSI), and wherein the data interface (101, 201, 301) is further configured to communicatively couple to a load data source network (LDSN); and
a network controller (102, 202, 302) communicatively coupled to the data interface (101, 201, 301) and configured to receive location based request data (103, 203, 303) with regard to the transmission of load data (104, 204, 304) from the load data source network (LDSN), and to provide configuration data (105, 205, 305) for the purpose of configuring the at least one radio access network (RAN) to use at least one specific location specific radio access network resource for transmission of the load data (104, 204, 304);
wherein the network controller (102, 202, 302) is configured to define the specific radio access network resources based on the received location based request data (103, 203, 303);
wherein the location based request data (103, 203, 303) refers exclusively to geographical parameters of the load data (104, 204, 304);
wherein the load data source network (LDSN) is configured to provide the load data (104, 204, 304); and
wherein the load data signal (LDSI) comprises the load data according to the radio access network resources; and **characterized in that**
the network controller (102, 202, 302) is configured to receive the location based request data (103, 203, 303) prior to reception of the load data (104, 204, 304) in the broadcast network (BCN); and
wherein the network manager (100, 200, 300) comprises a data storage (223, 323), and wherein the network controller (102, 202, 302) is configured to receive load data (104, 204, 304) and store the received load data (104, 204, 304) in the data storage (223, 323).

2. Network manager (100, 200, 300) according to claim 1, wherein the location based radio access network resources comprise at least one of:
a geographical location for transmission of the load data (104, 204, 304),
a frequency range or bandwidth for transmission of the load data (104, 204, 304),
a transmission time or time slot for transmission of the load data (104, 204, 304), and
a modulation scheme for transmission of the load data (104, 204, 304); and/or
wherein the location based request data (103, 203, 303) comprises at least one of:
a geographical location to which the load data (104, 204, 304) refers, and
an indication of a point of interest to which the load data (104, 204, 304) refers,
an indication of official regulations which the load data (104, 204, 304) comprises, and
an indication of roads to which the load data (104, 204, 304) refers.

3. Network manager (100, 200, 300) according to any one of the preceding claims, wherein the network controller (102, 202, 302) is configured to combine the load data (104, 204, 304) with the configuration data (105, 205, 305) into combined load data (310) and to provide the combined load data (310) to at least one of the radio access networks (RAN) and the load data source network (LDSN).

4. Network manager (100, 200, 300) according to any one of the preceding claims, wherein the load data (104, 204, 304) comprises at least two load data sets, and wherein the location based request data (103, 203, 303) comprises a location based request data set for each one of the load data sets; and
wherein the network controller (102, 202, 302) is configured to provide configuration data (105, 205, 305) for each one of the load data sets.

5. Method for a network manager for managing a broadcast network (BCN), comprising a one-way communication network, and wherein the broadcast network (BCN) wirelessly emits a load data signal (LDSI), the method comprising:
receiving (S11) location based request data (103, 203, 303) with regard to a transmission of load data (104, 204, 304) from a load data source network (LDSN), the location based request data (103, 203, 303) referring exclusively to geographical parameters of the load data (104, 204, 304); and
receiving the location based request data (103, 203, 303) prior to reception of the load data (104, 204, 304) in the broadcast network (BCN); and
receiving load data (104, 204, 304) and storing the received load data (104, 204, 304) in a data storage (223, 323)
providing (S12) configuration data (105, 205, 305) for the purpose of configuring at least one radio access network (RAN) of a broadcast network (BCN) to use at least one specific location specific radio access network resource for transmission of the load data (104, 204, 304) based on the received location based request data (103, 203, 303).

6. Method according to claim 5, wherein the location based radio access network resources comprise at least one of:
a geographical location for transmission of the load data (104, 204, 304),
a frequency range or bandwidth for transmission of the load data (104, 204, 304),
a transmission time or time slot for transmission of the load data (104, 204, 304), and
a modulation scheme for transmission of the load data (104, 204, 304); and/or
wherein the location based request data (103, 203, 303) comprises at least one of:
a geographical location to which the load data (104, 204, 304) refers, and
an indication of a point of interest to which the load data (104, 204, 304) refers,
an indication of official regulations which the load data (104, 204, 304) comprises, and
an indication of roads to which the load data (104, 204, 304) refers.

7. Method according to any one of the preceding method-based claims, further comprising combining the load data (104, 204, 304) with the configuration data (105, 205, 305) into combined load data (310) and providing the combined load data (310) to at least one of the radio access networks (RAN) and the load data source network (LDSN).

8. Method according to any one of the preceding method-based claims, wherein the load data (104, 204, 304) comprises at least two load data sets, and wherein the location based request data (103, 203, 303) comprises a location based request data set for each one of the load data sets; and wherein the configuration data (105, 205, 305) is provided for each one of the load data sets.

## Patentansprüche

1. Netzwerkmanager (100, 200, 300), umfassend:
eine Datenschnittstelle (101, 201, 301), die konfiguriert ist, um kommunikativ mit mindestens einem Funkzugangsnetzwerk (RAN) eines Rundfunknetzwerks (BCN) gekoppelt zu werden, wobei das Rundfunknetzwerk (BCN) ein Einwegkommunikationsnetzwerk umfasst und wobei das Rundfunknetzwerk (BCN) konfiguriert ist, um drahtlos ein Lastdatensignal (LDSI) auszusenden, und wobei die Datenschnittstelle (101, 201, 301) ferner konfiguriert ist, um kommunikativ mit einem Lastdatenquellennetzwerk (LDSN) gekoppelt zu werden; und
einen Netzwerkcontroller (102, 202, 302), der kommunikativ mit der Datenschnittstelle (101, 201, 301) gekoppelt ist
und konfiguriert ist, um standortbasierte Anforderungsdaten (103, 203, 303) hinsichtlich des Übertragens von Lastdaten (104, 204, 304) von dem Lastdatenquellennetzwerk (LDSN) zu empfangen und Konfigurationsdaten (105, 205, 305) zum Zweck des Konfigurierens des mindestens einen Funkzugangsnetzwerks (RAN) bereitzustellen, um mindestens eine spezifische standortspezifische Funkzugangsnetzwerkressource zum Übertragen der Lastdaten (104, 204, 304) zu verwenden;
wobei der Netzwerkcontroller (102, 202, 302) konfiguriert ist, um die spezifischen Funkzugangsnetzwerkressourcen basierend auf den empfangenen standortbasierten Anforderungsdaten (103, 203, 303) zu definieren;
wobei sich die standortbasierten Anforderungsdaten (103, 203, 303) ausschließlich auf geografische Parameter der Lastdaten (104, 204, 304) beziehen;
wobei das Lastdatenquellennetzwerk (LDSN) konfiguriert ist, um die Lastdaten (104, 204, 304) bereitzustellen; und
wobei das Lastdatensignal (LDSI) die Lastdaten gemäß den Funkzugangsnetzwerkressourcen umfasst; und **dadurch gekennzeichnet, dass** der Netzwerkcontroller (102, 202, 302) konfiguriert ist, um die standortbasierten Anforderungsdaten (103, 203, 303) vor dem Empfang der Lastdaten (104, 204, 304) in dem Rundfunknetzwerk (BCN) zu empfangen; und wobei der Netzwerkmanager (100, 200, 300) eine Datenspeicherung (223, 323) umfasst und wobei der Netzwerkcontroller (102, 202, 302) konfiguriert ist, um Lastdaten (104, 204, 304) zu empfangen und die empfangenen Lastdaten (104, 204, 304) in der Datenspeicherung (223, 323) zu speichern.

2. Netzwerkmanager (100, 200, 300) nach Anspruch 1, wobei die standortbasierten Funkzugangsnetzwerkressourcen mindestens eines der Folgenden umfassen:
einen geografischen Standort für das Übertragen der Lastdaten (104, 204, 304),
einen Frequenzbereich oder eine Bandbreite zum Übertragen der Lastdaten (104, 204, 304),
einen Übertragungszeitpunkt oder -zeitschlitz für das Übertragen der Lastdaten (104, 204, 304) und
ein Modulationsschema zum Übertragen der Lastdaten (104, 204, 304) und/oder
wobei die standortbasierten Anforderungsdaten (103, 203, 303) mindestens eines der Folgenden umfassen:
einen geographischen Standort, auf den sich die Lastdaten (104, 204, 304) beziehen, und
eine Angabe eines Punkts von Interesse, auf den sich die Lastdaten (104, 204, 304) beziehen,
eine Angabe zu behördlichen Vorschriften, die die Lastdaten (104, 204, 304) umfassen, und
eine Angabe von Straßen, auf die sich die Lastdaten (104, 204, 304) beziehen.

3. Netzwerkmanager (100, 200, 300) nach einem der vorstehenden Ansprüche, wobei der Netzwerkcontroller (102, 202, 302) konfiguriert ist, um die Lastdaten (104, 204, 304) mit den Konfigurationsdaten (105, 205, 305) zu kombinierten Lastdaten (310) zu kombinieren und die kombinierten Lastdaten (310) mindestens einem von den Funkzugangsnetzwerken (RAN) und dem Lastdatenquellennetzwerk (LDSN) bereitzustellen.

4. Netzwerkmanager (100, 200, 300) nach einem der vorstehenden Ansprüche, wobei die Lastdaten (104, 204, 304) mindestens zwei Lastdatensätze umfassen und wobei die standortbasierten Anforderungsdaten (103, 203, 303) für jeden der Lastdatensätze einen standortbasierten Anforderungsdatensatz umfassen und
wobei der Netzwerkcontroller (102, 202, 302) konfiguriert ist, um Konfigurationsdaten (105, 205, 305) für jeden der Lastdatensätze bereitzustellen.

5. Verfahren für einen Netzwerkmanager zum Verwalten eines Rundfunknetzwerks (BCN), umfassend ein Einwegkommunikationsnetzwerk, und wobei das Rundfunknetzwerk (BCN) drahtlos ein Lastdatensignal (LDSI) aussendet, wobei das Verfahren umfasst:
Empfangen (S11) von standortbasierten Anforderungsdaten (103, 203, 303) hinsichtlich einer Übertragung von Lastdaten (104, 204, 304) von einem Lastdatenquellennetzwerk (LDSN), wobei sich die standortbasierten Anforderungsdaten (103, 203, 303) ausschließlich auf geographische Parameter der Lastdaten (104, 204, 304) beziehen; und
Empfangen der standortbasierten Anforderungsdaten (103, 203, 303) vor dem Empfangen der Lastdaten (104, 204, 304) in dem Rundfunknetzwerk (BCN) und
Empfangen von Lastdaten (104, 204, 304) und Speichern der empfangenen Lastdaten (104, 204, 304) in einer Datenspeicherung (223, 323);
Bereitstellen (S12) von Konfigurationsdaten (105, 205, 305) zum Zweck des Konfigurierens mindestens eines Funkzugangsnetzwerks (RAN) eines Rundfunknetzwerks (BCN) zum Verwenden mindestens einer spezifischen standortspezifischen Funkzugangsnetzwerkressource zum Übertragen der Lastdaten (104, 204, 304) basierend auf den empfangenen standortbasierten Anforderungsdaten (103, 203, 303).

6. Verfahren nach Anspruch 5, wobei die standortbasierten Funkzugangsnetzwerkressourcen mindestens eines der Folgenden umfassen:
einen geografischen Standort für das Übertragen der Lastdaten (104, 204, 304),
einen Frequenzbereich oder eine Bandbreite zum Übertragen der Lastdaten (104, 204, 304),
einen Übertragungszeitpunkt oder -zeitschlitz für das Übertragen der Lastdaten (104, 204, 304) und
ein Modulationsschema zum Übertragen der Lastdaten (104, 204, 304) und/oder
wobei die standortbasierten Anforderungsdaten (103, 203, 303) mindestens eines der Folgenden umfassen:
einen geographischen Standort, auf den sich die Lastdaten (104, 204, 304) beziehen, und
eine Angabe eines Punkts von Interesse, auf den sich die Lastdaten (104, 204, 304) beziehen,
eine Angabe zu behördlichen Vorschriften, die die Lastdaten (104, 204, 304) umfassen, und
eine Angabe von Straßen, auf die sich die Lastdaten (104, 204, 304) beziehen.

7. Verfahren nach einem der vorstehenden verfahrensbasierten Ansprüche, ferner umfassend das Kombinieren der Lastdaten (104, 204, 304) mit den Konfigurationsdaten (105, 205, 305) zu kombinierten Lastdaten (310) und das Bereitstellen der kombinierten Lastdaten (310) an mindestens eines von den Funkzugangsnetzwerken (RAN) und dem Lastdatenquellennetzwerk (LDSN).

8. Verfahren nach einem der vorstehenden verfahrensbasierten Ansprüche, wobei die Lastdaten (104, 204, 304) mindestens zwei Lastdatensätze umfassen und wobei die standortbasierten Anforderungsdaten (103, 203, 303) für jeden der Lastdatensätze einen standortbasierten Anforderungsdatensatz umfassen und
wobei die Konfigurationsdaten (105, 205, 305) für jeden der Lastdatensätze bereitgestellt werden.

## Revendications

1. Gestionnaire de réseau (100, 200, 300) comprenant :
une interface de données (101,201,301) configurée pour se coupler de manière communicative à au moins un réseau d'accès radio (RAN) d'un réseau de diffusion (BCN), dans lequel le réseau de diffusion (BCN) comprend un réseau de communication unidirectionnel, et dans lequel le réseau de diffusion (BCN) est configuré pour émettre sans fil un signal de données de charge (LDSI), et dans lequel l'interface de données (101,201,301) est en outre configurée pour se coupler de manière communicative à un réseau de source de données de charge (LDSN) ; et
un dispositif de commande de réseau (102, 202, 302) couplé de manière communicative à l'interface de données (101,201,301)
et configuré pour recevoir des données de demande basées sur l'emplacement (103, 203, 303) concernant la transmission de données de charge (104, 204, 304) à partir du réseau de source de données de charge (LDSN), et pour fournir des données de configuration (105, 205, 305) dans le but de configurer l'au moins un réseau d'accès radio (RAN) pour utiliser au moins une ressource spécifique de réseau d'accès radio spécifique à l'emplacement pour la transmission des données de charge (104, 204, 304) ;
dans lequel le dispositif de commande de réseau (102, 202, 302) est configuré pour définir les ressources spécifiques de réseau d'accès radio en fonction des données de demande basées sur l'emplacement reçues (103, 203, 303) ;
dans lequel les données de demande basées sur l'emplacement (103, 203, 303) se réfèrent exclusivement aux paramètres géographiques des données de charge (104, 204, 304) ;
dans lequel le réseau de source de données de charge (LDSN) est configuré pour fournir les données de charge (104, 204, 304) ; et
dans lequel le signal de données de charge (LDSI) comprend les données de charge selon les ressources de réseau d'accès radio ; et **caractérisé en ce que** le dispositif de commande de réseau (102, 202, 302) est configuré pour recevoir les données de demande basées sur l'emplacement (103, 203, 303) avant la réception des données de charge (104, 204, 304) dans le réseau de diffusion (BCN) ; et dans lequel le gestionnaire de réseau (100, 200, 300) comprend un stockage de données (223, 323), et dans lequel le dispositif de commande de réseau (102, 202, 302) est configuré pour recevoir des données de charge (104, 204, 304) et stocker les données de charge reçues (104, 204, 304) dans le stockage de données (223, 323).

2. Gestionnaire de réseau (100, 200, 300) selon la revendication 1, dans lequel les ressources de réseau d'accès radio basées sur l'emplacement comprennent au moins l'un parmi :
un emplacement géographique pour la transmission des données de charge (104, 204, 304),
une gamme de fréquences ou une largeur de bande pour la transmission des données de charge (104, 204, 304),
un temps de transmission ou un créneau horaire pour la transmission des données de charge (104, 204, 304), et
un schéma de modulation pour la transmission des données de charge (104, 204, 304) ; et/ou
dans lequel les données de demande basées sur l'emplacement (103, 203, 303) comprennent au moins l'un parmi :
un emplacement géographique auquel les données de charge (104, 204, 304) se réfèrent, et
une indication d'un point d'intérêt auquel les données de charge (104, 204, 304) se réfèrent,
une indication des réglementations officielles que les données de charge (104, 204, 304) comprennent, et
une indication des routes auxquelles les données de charge (104, 204, 304) se réfèrent.

3. Gestionnaire de réseau (100, 200, 300) selon l'une quelconque des revendications précédentes, dans lequel le dispositif de commande de réseau (102, 202, 302) est configuré pour combiner les données de charge (104, 204, 304) avec les données de configuration (105, 205, 305) en données de charge combinées (310) et pour fournir les données de charge combinées (310) à au moins l'un parmi les réseaux d'accès radio (RAN) et le réseau de source de données de charge (LDSN).

4. Gestionnaire de réseau (100, 200, 300) selon l'une quelconque des revendications précédentes, dans lequel les données de charge (104, 204, 304) comprennent au moins deux ensembles de données de charge, et dans lequel les données de demande basées sur l'emplacement (103, 203, 303) comprennent un ensemble de données de demande basées sur l'emplacement pour chacun des ensembles de données de charge ; et
dans lequel le dispositif de commande de réseau (102, 202, 302) est configuré pour fournir des données de configuration (105, 205, 305) pour chacun des ensembles de données de charge.

5. Procédé permettant à un gestionnaire de réseau de gérer un réseau de diffusion (BCN), comprenant un réseau de communication unidirectionnel, et dans lequel le réseau de diffusion (BCN) émet sans fil un signal de données de charge (LDSI), le procédé comprenant :
la réception (S11) de données de demande basées sur l'emplacement (103, 203, 303) concernant une transmission de données de charge (104, 204, 304) à partir d'un réseau de source de données de charge (LDSN), les données de demande basées sur l'emplacement (103, 203, 303) se référant exclusivement aux paramètres géographiques des données de charge (104, 204, 304) ; et
la réception des données de demande basées sur l'emplacement (103, 203, 303) avant la réception des données de charge (104, 204, 304) dans le réseau de diffusion (BCN) ; et
la réception des données de charge (104, 204, 304) et le stockage des données de charge reçues (104, 204, 304) dans un
stockage de données (223, 323)
la fourniture (S12) des données de configuration (105, 205, 305) dans le but de configurer au moins un réseau d'accès radio (RAN) d'un réseau de diffusion (BCN) pour utiliser au moins une ressource spécifique de réseau d'accès radio spécifique à un emplacement pour la transmission des données de charge (104, 204, 304) en fonction des données de demande basées sur l'emplacement reçues (103, 203, 303).

6. Procédé selon la revendication 5, dans lequel les ressources de réseau d'accès radio basées sur l'emplacement comprennent au moins l'un parmi :
un emplacement géographique pour la transmission des données de charge (104, 204, 304),
une gamme de fréquences ou une largeur de bande pour la transmission des données de charge (104, 204, 304),
un temps de transmission ou un créneau horaire pour la transmission des données de charge (104, 204, 304), et
un schéma de modulation pour la transmission des données de charge (104, 204, 304) ; et/ou
dans lequel les données de demande basées sur l'emplacement (103, 203, 303) comprennent au moins l'un parmi :
un emplacement géographique auquel les données de charge (104, 204, 304) se réfèrent, et
une indication d'un point d'intérêt auquel les données de charge (104, 204, 304) se réfèrent,
une indication des réglementations officielles que les données de charge (104, 204, 304) comprennent, et
une indication des routes auxquelles les données de charge (104, 204, 304) se réfèrent.

7. Procédé selon l'une quelconque des revendications précédentes basées sur le procédé, comprenant en outre la combinaison des données de charge (104, 204, 304) avec les données de configuration (105, 205, 305) en données de charge combinées (310) et la fourniture des données de charge combinées (310) à au moins l'un parmi les réseaux d'accès radio (RAN) et le réseau de source de données de charge (LDSN).

8. Procédé selon l'une quelconque des revendications précédentes basées sur le procédé, dans lequel les données de charge (104, 204, 304) comprennent au moins deux ensembles de données de charge, et dans lequel les données de demande basées sur l'emplacement (103, 203, 303) comprennent un ensemble de données de demande basées sur l'emplacement pour chacun des ensembles de données de charge ; et
dans lequel les données de configuration (105, 205, 305) sont fournies pour chacun des ensembles de données de charge.
